# EUROPÄISCHE PATENTSCHRIFT

(11) **EP 0 612 341 B1**
(45) Veröffentlichungstag und Bekanntmachung des Hinweises auf die Patenterteilung: **19.08.1998**
(21) Anmeldenummer: 93920719.7
(22) Anmeldetag: 14.09.1993
(51) Int. Cl.: C09D 13/00

(54) **Schreibstift und Verfahren zur Herstellung von Schreibstiften**
Pencil and process for producing pencils
Crayon et procédé de fabrication de crayons

(30) Priorität: 15.09.1992 DE 4230792
(43) Veröffentlichungstag der Anmeldung: 31.08.1994
(73) Patentinhaber: BELLAFORM EXTRUSIONSTECHNIK GMBH, 55218 Ingelheim (DE)
(72) Erfinder: METZGER, Burkhard, D-55218 Ingelheim (DE); ZIOLKOWSKI, Hans, Joachim, D-55218 Ingelheim (DE)
(74) Vertreter: Fuchs Mehler Weiss
(86) Internationale Anmeldenummer: EP9302483
(87) Internationale Veröffentlichungsnummer: WO9406875

(56) Entgegenhaltungen:
- DE-A- 1 794 348
- DE-A- 3 817 807
- FR-A- 2 378 834

## Beschreibung

Die Erfindung betrifft einen Schreibstift aus einer festen Schreibmine und einer Minenumhüllung, wobei das Bindemittel zumindest im Umhüllungsmaterial aus Polymeren besteht. Die Erfindung bezieht sich auch auf ein Verfahren zur Herstellung solcher Schreibstifte.

Aus der DE-PS 38 27 968 ist eine Bleistiftminenmasse bekannt, die 13 bis 21 Gew.-% Styrol-Acryl-Copolymerisat, nachfolgend als "SAN" abgekürzt, sowie 1 bis 6 Gew.-% Calciumcarbonat, 3 bis 6 Gew.-% Stearinsäure, 3 bis 12 Gew.-% Calciumstearat, 0,05 bis 0,15 Gew.-% BHT (2,6-Di-tertiär-butyl-p-kresol), 0 bis 1,5 Gew.-% Ruß, 60 bis 72 Gew.-% Graphit und 0 bis 32 Gew.-% Ton (Kaolin) enthält.

Der Nachteil des SAN besteht darin, daß es ein schlagzäh modifiziertes Polystyrol ist, das im angeschmolzenen Zustand aufgrund seiner Seitenketten äußerst zähflüssig ist und sich daher nicht leicht verarbeiten läßt, so daß entsprechend hohe Kräfte im Extruder aufgewendet werden müssen. Ein weiterer Nachteil besteht darin, daß das SAN vor der Verarbeitung vorgetrocknet werden muß, um eine spätere Blasenbildung in der Mine zu verhindern. Darüber hinaus ist SAN relativ teuer, so daß das Bedürfnis besteht, SAN durch ein kostengünstigeres Material zu ersetzen.

Aus der DE-AS 15 61 764 ist ein Schreibstift bekannt, dessen Mine als Bindemittel aus ABS-Polymerisat und einem Pfropfpolymerisat besteht. Die Minenumhüllung besteht vollständig aus einer geschäumten thermoplastischen Formmasse mit einer Dichte von 0,3 bis 0,7 g/cm³, wobei ebenfalls ABS-Polymerisate zum Einsatz kommen. Aus der DE-AS 15 61 764 ist es auch bekannt, als thermoplastische Masse treibmittelhaltiges Polystyrol einzusetzen, ohne daß jedoch konkrete Angaben über die Zusammensetzung des Umhüllungsmaterials gemacht werden. Auch die ABS-Polymerisate weisen die o.g. Nachteile auf und sind außerdem ebenfalls relativ teuer in der Herstellung. Um eine hochglänzende Oberfläche zu erzeugen, wird der extrudierte Schreibstiftstrang während des Abziehvorgangs durch ein geeignetes Lösungsmittel geführt. Daran anschließend wird der endlose Strang auf Schreibstiftlänge zerschnitten und geprägt. Das Eintauchen in Lösungsmittel hat jedoch den Nachteil, daß der Schreibstift die Farbe der Umhüllung aufweist, so daß Schreibstifte mit unterschiedlicher Härte der Schreibmine äußerlich nicht kenntlich gemacht werden können.

Die FR,A,2378834 beschreibt eine Minenumhüllung mit polyvinylaromatischem Kunststoff, dem mehrere andere Stoffe wie Polyethylen, Polypropylen oder Glasfasern zugesetzt werden. Wenn Polystyrol erwähnt wird, so soll dieses Material offensichtlich die polyaromatischen Polymere ersetzen, wobei das Polystyrol als Alkyl-Nitrilbutadienstyrol definiert wird, das im Beispiel 1 als ABS-Polymer abgekürzt wird. Die Vorteile bezügl. der Spitzbarkeit werden auf die Eigenschaften der ABS-Polymere zurückgeführt.

Die DE-OS 20 30 578 beschreibt ein Verfahren und eine Vorrichtung zum kontinuierlichen Herstellen und/oder Umhüllen von Strangprofilen, die u.a. für Schreibstifte eingesetzt werden. Zur Herstellung der Strangprofile sind alle thermoplastischen Kunststoffe geeignet, wie beispielsweise Polyolefine, modifzierte Polystyrole wie z.B. ABS-Polymerisate, thermoplastische Werkstoffe auf Zellulosebasis, thermoplastisch verarbeitbare Polyurethane, Polyamide, Polycarbonate, Polyvinylchlorid und chloriertes Polyvinylchlorid, Ethylenvinylacetate, Polyacetal und PVC-modifizierte Ethylenvinylacetate. Diese Strangprofile können auch zur Umhüllung von Minen von Schreibstiften eingesetzt werden. Nähere Angaben über die Zusammensetzung des Minenmaterials und der Umhüllungsmasse werden allerdings nicht gemacht.

Die DE-PS 16 69 158 beschreibt thermoplastische Bindemittel zur kontinuierlichen Herstellung von Bleistift-, Kopierstift- und Buntstiftminen. Als Bindemittel werden auch hier ABS-Polymerisate angegeben.

Aus der DE-PS 74 4 306 ist eine Schreibmine bekannt, die Polystyrol aufweist. Für die Herstellung wird entweder niedrigpolymeres Styrol oder monomeres Styrol eingesetzt, das nach der Herstellung der Minen zu Polystyrol polymerisiert wird. Dieses Verfahren hat den Nachteil, daß die Ummantelung erst nach der Polymerisation aufextrudiert werden kann. Weiterhin enthält die Mine einen sehr hohen Anteil von Calciumstearat, aber keine Stearinsäure.

Die US-PS 4,019,822 beschreibt die Umhüllung einer Schreibmine in Form einer gewickelten, gereckten Kunststoffolie, die Polystyrol und Polyethylen aufweist. Dieser bekannte Schreibstift ist nicht spitzbar, da die Mine durch spiralförmiges Abreißen von Streifen der Kunststoffolie freigelegt wird. Die Kunststoffolie ist mit Klebstoff versehen, der jedoch wegen der notwendigen Ablösung der Kunststoffolie nur eine geringe Haftung der Mine gewährleistet.

Nachteilig bei diesem Schreibstift ist u.a. die bicht zufriedenstellende Haftung der Mine am Umhüllungsmaterial.

Bei den bisher bekannten Polymer-Schreibstiften ist die Spitzbarkeit noch verbesserungsbedürftig, wobei auch die Haftung zwischen Mine und Minenumhüllung teilweise zu gering ist, so daß beim Spitzen die Mine leicht brechen kann.

Aufgabe der Erfindung ist daher ein Schreibstift, der sich durch verbesserte Spitzbarkeit auszeichnet und eine bessere Haftung zwischen Mine und Umhüllung aufweist, wobei kostengünstigere Materialien zum Einsatz kommen sollen. Es ist auch Aufgabe der Erfindung, eine Schreibmine und ein entsprechend kostengünstiges Verfahren zur Herstellung solcher Schreibstifte bereitzustellen.

Diese Aufgabe wird mit einem Schreibstift gemäß Anspruch 1 gelöst. Das Verfahren ist Gegenstand des Patentanspruchs 17.

Da das meiste Material eines Schreibstiftes für die Umhüllung der Mine benötigt wird, können die Herstellungskosten deutlich gesenkt werden, wenn die üblicherweise hierfür verwendeten Polymere wie SAN und ABS durch preiswertere Polymere ersetzt werden. Es hat sich gezeigt, daß das weitaus kostengünstigere Polystyrol als Bindemittel im Umhüllungsmaterial vorteilhaft eingesetzt werden kann, wenn gleichzeitig LDPE im Umhüllungsmaterial vorhanden ist. Überraschenderweise kann über den Anteil des LDPEs die Spitzbarkeit der Umhüllung eingestellt werden, so daß mit Holzbleistifen vergleichbare Werte erzielt werden konnten.

Als weiterer Vorteil hat sich herausgestellt, daß durch die Verwendung von talkumgefülltem Material, also talkumgefülltem Polystyrol oder talkumgefülltem LDPE, auch die Haftung zur Mine verbessert wurde, so daß beim Spitzen der Minenbruch deutlich reduziert werden konnte. Dies ist im Vergleich zur Verwendung von reinem Talkum und ungefülltem Polystyrol oder LDPE möglicherweise darauf zurückzuführen, daß das Talkum im Umhüllungsmaterial besser verteilt ist und somit auch längs der Mine keine Bereiche mit geringerer Haftung vorhanden sind. Wenn talkumgefülltes Polystyrol oder talkumgefülltes LDPE verwendet wird, kann zusätzlich auch ungefülltes PS oder LDPE eingesetzt sein. Der Talkumanteil im LDPE kann 30 - 70 Gew.-% betragen. Vorzugsweise wird ein talkumgefülltes LDPE verwendet, bei dem der Talkumanteil etwa 50 Gew.-% beträgt. Der MFI-Wert (190°C/2,16 kg) des LDPE liegt vorzugsweise im Bereich von 0,2 bis 20 g/10 min.

Wenn talkumgefülltes Polystyrol eingesetzt wird, so liegt der Anteil des Talkums vorzugsweise ebenfalls bei 30 - 70 Gew.-%.

Es hat sich gezeigt, daß sehr gute Ergebnisse hinsichtlich Haftung und Spitzbarkeit erzielt werden, wenn der Polystyrolanteil im Umhüllungsmaterial vorzugsweise zwischen 60 und 70 Gew.-% beträgt und der Anteil des talkumgefüllten LDPEs bei 20 bis 40 Gew.-% liegt, bzw. der Anteil des talkumgefüllten Polystyrols bei 60 - 90 Gew.-% und der des LDPEs bei 5 - 35 Gew.-%. Als Polystyrol wird vorzugsweise Standardpolystyrol eingesetzt, das als Granulat bezogen werden kann.

Vorzugsweise wird ein treibmittelfreies Polystyrol für das Umhüllungsmaterial des Schreibstiftes eingesetzt, so daß zum Aufschäumen ein Treibmittel zugesetzt werden muß. Dies ist hinsichtlich des Herstellungsverfahrens von Vorteil. Der Treibmittelanteil liegt bei 0,2 bis 1,2 Gew.-%.

Zusätzlich enthält das Umhüllungsmaterial noch eingefärbtes Polymermaterial (sogenanntes Farbbatch), vorzugsweise eingefärbtes Polystyrol, wobei der Anteil je nach gewünschter Farbgebung bei 0,2 bis 3 Gew.-% liegt.

Bei der erfindungsgemäßen Schreibmine wird ebenfalls als Bindemittel Polystyrol eingesetzt, wodurch die Haftung zwischen Mine und Umhüllung noch weiter verbessert werden kann. Gleichzeitig können dadurch die Herstellungskosten des gesamten Schreibstiftes weiter gesenkt werden, weil ein einheitliches Bindemittel sowohl für das Umhüllungsmaterial als für das Minenmaterial verwendet wird. Beschaffung und Lagerhaltung können somit kostengünstiger gestaltet werden.

Als Polystyrol kann außer Standardpolystyrol auch HIPS (High-Impact-Polystyrol) im Minenmaterial enthalten sein. Der Polystyrolanteil im Minenmaterial liegt bei 10 bis 40 Gew.-%, vorzugsweise bei 26 - 40 Gew.-%, der Stearinsäureanteil bei 3 - 10 Gew.-% und der Calciumstearatanteil bei 2 - 10 Gew.-%. Calciumstearat beeinflußt ebenfalls die Abriebeigenschaften günstig. Die Stearinsäure dient als Gleitmittel, so daß im Extruder nicht allzugroße Kräfte aufgewendet werden müssen. Auch das Abriebverhalten des Minenmaterials wird über die Stearinsäure positiv eingestellt. Eine weitere Verbesserung des Abriebverhaltens der Mine kann durch die Zugabe von Kieselsäure, vorzugsweise mit einem Anteil von 3 - 8 Gew.-% erreicht werden.

Das erfindungsgemäße Schreibstiftminenmaterial weist neben Polystyrol oder HIPS als Bindemittel im Falle einer schwarzen Mine einen Farbstoff in Form von Graphit mit einem Gewichtsanteil von 50 bis 80 Gew.-% auf.

Der Graphit wird in natürlicher oder synthetischer Form als Pudergraphit verwendet, wobei die Körnung entsprechend der gewünschten Schwärze und des Abriebverhaltens eingestellt wird. Je kleiner die Körnung ist, desto besser wird die Schwärze und das Abriebverhalten beeinflußt. Mit abnehmender Körnung nimmt auch die Festigkeit der fertigen Mine zu. Es hat sich diesbezüglich als vorteilhaft herausgestellt, wenn die Körnung des Pudergraphits im Bereich von 15 bis 50 µm liegt.

Um die Schwärze zu verbessern, kann die Mine Ruß und/oder Eisenoxid enthalten, deren Anteile vorzugsweise bei 20 - 40 Gew.-% bzw. 1 - 10 Gew.-% liegen. Hinsichtlich einer gleichmäßigen Verteilung hat sich insbesondere rußgefülltes Polystyrol ausgezeichnet.

Weiterhin kann der Schreibstift eine Außenschicht aufweisen, die ebenfall als wesentlichen Bestandteil Polystyrol aufweist. Anstelle des Polystyrols, das zu 50 Gew.-% oder mehr in der Außenschicht enthalten ist, kann auch LDPE verwendet werden. Zum Einfärben der Außenschicht werden ebenfalls Farbbatches verwendet.

Wenn stark glänzende Schreibstifte gewünscht werden, so hat es sich herausgestellt, daß dies mit der Kombination talkumgefülltes Polystyrol im Umhüllungsmaterial mit polystyrolhaltiger Außenschicht am besten realisiert werden kann.

Beispielhafte Zusammensetzungen von Minenmaterial, Umhüllungsmaterial und Außenschicht werden in den nachfolgenden Tabellen 1 bis 3 angegeben.

**Tabelle 1a**

| Umhüllungsmaterial | | | | | | |
|---|---|---|---|---|---|---|
| Angaben in Gew.-% | | | | | | |
| Standard PS | 60 | 62 | 63,2 | 67,3 | 69,3 | 70 |
| | | | | | | |
| talkumgef. LDPE (50-Gew.-% Talkum) | 37,3 | 35,1 | 35 | 30 | 30 | 27 |
| | | | | | | |
| Farbbatches | 1,5 | 2,1 | 1,5 | 2,3 | 0,3 | 2 |
| | | | | | | |

| Treibmittel- | | | | | | |
|---|---|---|---|---|---|---|
| | | | | | | |
| -Pulver | - | - | 0,3 | 0,3 | 0,3 | - |
| | | | | | | |
| -Granulat | 1,2 | 0,8 | - | - | - | 1 |
| | | | | | | |
| Haftver mittler | - | - | - | 0,1 | 0,1 | - |
| Standard-PS: z.B. Styrol 634 (Handelsname der Fa. Dow) oder PS143E (Handelsname der Fa. BASF) | | | | | | |
| Talkumgefülltes LDPE: (50 Gew.-% Talkum) z.B. FPE50T (Handelsname der Fa. Schulmann) oder HT-Stab1074 (Handelsname der Fa. Treffert) | | | | | | |

**Tabelle 1b**

| Umhüllungsmaterial | | | | | | |
|---|---|---|---|---|---|---|
| Angaben in Gew.-% | | | | | | |
| Standard PS | 0 | 0 | 18,2 | 7,3 | 24.3 | 22 |
| | | | | | | |
| talkumgef. PS (40-Gew.-% Talkum) | 85 | 80 | 75 | 70 | 65 | 60 |
| | | | | | | |
| LDPE | 12,3 | 17,1 | 5 | 20 | 10 | 15 |
| | | | | | | |
| Farbbatches | 1,5 | 2,1 | 1,5 | 2,3 | 0,3 | 2 |
| | | | | | | |

| Treibmittel | | | | | | |
|---|---|---|---|---|---|---|
| | | | | | | |
| Pulver | 0 | 0 | 0,3 | 0,3 | 0,3 | 0 |
| | | | | | | |
| Granulat | 1,2 | 0.8 | 0 | 0 | 0 | 1 |
| | | | | | | |
| Haftvermittler | 0 | 0 | 0 | 0,1 | 0,1 | 0 |
| Standard-PS: z.B. Styrol 634 (Handelsname der Fa. Dow) oder PS 143E (Handelsname der Fa. BASF) | | | | | | |
| Talkumgefülltes Polystyrol: (40 Gew.-% Talkum) z.B. FKS40T (Handelsname der Fa. Schulman) | | | | | | |
| LDPE: z.B. Lupolen 1810H (Handelsname der Fa. BASF) | | | | | | |

**Tabelle 2a**

| Minenmaterial | | | | | |
|---|---|---|---|---|---|
| Angaben in Gew.-% | | | | | |
| PS | | | | | |
| -Standard PS | 10 | - | 20 | - | 30 |
| | | | | | |
| -HIPS | - | 10 | - | 20 | - |
| | | | | | |
| Graphit | 77,3 | 77,3 | 71,1 | 71,1 | 64,4 |
| | | | | | |
| Stearinsäure | 9,5 | 9,5 | 6,1 | 6,1 | 3,5 |
| | | | | | |
| Calciumstearat | 3,2 | 3,2 | 2,8 | 2,8 | 2,1 |

Wenn anstelle des Graphits ein anderer Farbstoff verwendet wird, so liegt der Stearinsäureanteil bei 30 - 40 Gew.-% und der der Farbstoffe bei 45 - 55 Gew.-%.

**Tabelle 2b**

| Minenmaterial | | | | | |
|---|---|---|---|---|---|
| Angaben in Gew.-% | | | | | |
| PS | | | | | |
| -Standard PS | 30 | - | - | 40 | - |
| | | | | | |
| -HIPS | - | 30 | 30 | - | 40 |
| | | | | | |
| Graphit | 56 | 64,4 | 56 | 54,2 | 54,2 |
| | | | | | |
| Stearinsäure | 4,9 | 3,5 | 4,9 | 3,5 | 3,5 |
| | | | | | |
| Calciumstearat | 9,1 | 2,1 | 9,1 | 2,3 | 2,3 |
| Standard-PS: z.B. PS165H (Handelsnamen der Fa. BASF) PS158K (Handelsnamen der Fa. BASF) | | | | | |
| HIPS: z.B. PS476L natur (Handelsnamen der Fa. BASF) oder PS476L weiß (Handelsnamen der Fa. BASF) | | | | | |

**Tabelle 2c**

| Minenmaterial | |
|---|---|
| Angaben in Gew.-% | |
| Kieselsäure | 3 - 8 Gew.-% |
| Ruß | 20 - 40 Gew.-% |
| Eisenoxid | 1 - 10 Gew.-% |
| Graphit | 27,3 Gew.-% |
| Calciumstearat | 2,1 Gew.-% |
| Stearinsäure | 3,5 Gew.-% |
| Polystyrol | Rest |

**Tabelle 3**

| Außenschicht | | | | | |
|---|---|---|---|---|---|
| Standard PS | 50 | 65 | - | - | 85 |
| | | | | | |
| LDPE | - | - | 75 | 80 | - |
| | | | | | |
| talkumgef. LDPE (30 Gew.-% Talkum) | 28 | - | 15 | 15 | 3 |
| | | | | | |
| Farbbatches | 2 | 10 | 10 | 5 | 2 |
| | | | | | |
| Haftvermittler | 20 | 25 | - | - | 10 |

Das Herstellungsverfahren, das auf der Extrusion von Minenmaterial und Umhüllungsmaterial basiert, ist dadurch gekennzeichnet, daß als Bindemittel zumindest für das Umhüllungsmaterial PS verwendet wird, daß für das Minenmaterial dem Polymermaterial erst im Extruder die weiteren Minenkomponenten zugesetzt und im Extruder mit dem Polymermaterial vermischt werden und daß dem Polystyrol für das Umhüllungsmaterial im Extruder ein endotherm wirkendes Treibmittel zugegeben wird und daß der Schäumvorgang des Polystyrols über die Extrudertemperatur gesteuert wird. Gut geeignet sind solche endotherm wirkenden Treibmittel, die aus organischen Säuren und Carbonaten bzw. deren Derivaten bestehen.

Die Verwendung von Polystyrol als Bindemittel bietet den Vorteil, daß kein Vortrocknen des Bindemittels erforderlich ist. Da zur Verarbeitung des Polystyrols im Extruder geringere Kräfte aufgewendet werden müssen, ist auch die Stromaufnahme des Extruders deutlich geringer als bei den bekannten Polymermaterialien, so daß auch das Herstellungsverfahren kostengünstiger gestaltet werden kann.

Zur Herstellung des Minenmaterials, bei dem ebenfalls vorzugsweise als Bindemittel Polystyrol eingesetzt wird, wird das Polymermaterial in Granulatform dem Extruder zugeführt. Graphit, Calciumstearat und Stearinsäure werden außerhalb des Extruders gemischt und dann dieses Gemisch in Pulverform dem Extruder zugeführt. Die getrennte Zuführung dieser beiden Komponenten bietet den Vorteil, daß sich die Zusammensetzung des Minenmaterials leichter einstellen und ändern läßt. Man ist daher in der Wahl der Minenhärte flexibler und kann schneller von einer Minenhärte auf die andere umstellen.

Während im Stand der Technik treibmittelhaltiges Polystyrol für das Umhüllungsmaterial erwähnt wird, wird erfindungsgemäß eine Mischung aus Polystyrol und Treibmittel verwendet, was insbesondere dann von Vorteil ist, wenn ein endothermes Treibmittel zum Einsatz kommt. Bei endothermen Treibmitteln muß Wärme von außen zugeführt werden, was den Vorteil bietet, daß der Schäumvorgang über die Temperatur des Extruders steuerbar ist. Bei exotherm wirkenden Treibmitteln kann ein unkontrolliertes Schäumen auftreten, was die Qualität der Umhüllung nachteilig beeinflußt. Je mehr Treibmittel nämlich in der Umhüllungsmasse enthalten ist, desto mehr Poren entstehen, wodurch die Festigkeit und die Haftung zur Mine leidet. Der Treibmittelgehalt muß daher exakt eingestellt werden, wobei sich als vorteilhaft ein Anteil von 0,2 bis 1 Gew.-% herausgestellt hat. Das Treibmittel (beispielsweise Hydrocearol CF40, Handelsname der Fa. Boehringer) kann als Pulver oder Granulat eingesezt werden. Wenn ein pulverförmiges Treibmittel verwendet wird, ist vorzugsweise auch ein Haftvermittler zuzugeben, damit keine Entmischung von Granulat und Treibmittel auftreten kann, wodurch der Aufschäumprozeß nicht mehr in der gewünschten Weise steuerbar ist. Bei granulatförmigen Treibmittel kann auf einen Haftvermittler verzichtet werden. Als Haftvermittler wird vorzugsweise ein Öl verwendet.

Die Temperaturen im Extruder liegen je nach Treibmittelanteil und Polystyrolanteil bei 150 bis 200°C.

Die Extrusion des Minenmaterials erfolgt bei einer Temperatur von ca. 180°C, woran sich eine Abkühlung des Minenmaterials anschließt. Als besonders vorteilhaft hat sich herausgestellt, wenn die Temperatur des Minenprofils lediglich so weit abgekühlt wird, daß der Minenstrang nicht mehr plastisch ist. Dies wird bei einer Temperatur von ca. 170°C erreicht. Mit dieser Temperatur wird das Minenprofil ebenfalls durch Extrusion mit dem Umhüllungsmaterial und ggfs. mit einer Außenschicht versehen. Die Extrusion des Umhüllungsmaterials und der Außenschicht kann in einem Arbeitsgang vollzogen werden. Die Extrusion des Umhüllungsmaterials und ggfs. der Außenschicht erfolgt in einem im Kühlmedium befindlichen Kalibrierwerkzeug.

## Patentansprüche

1. Schreibstift aus einer festen Schreibmine und einer Minenumhüllung, wobei das Bindemittel zumindest im Umhüllungsmaterial aus Polymeren besteht, dadurch gekennzeichnet,
daß das Bindemittel zumindest im Umhüllungsmaterial Polystyrol ist und
daß das Umhüllungsmaterial LDPE aufweist, wobei das Polystyrol und/oder das LDPE zumindest teilweise talkumgefüllt ist/sind.

2. Schreibstift nach Anspruch 1, dadurch gekennzeichnet, daß der Anteil des Polystyrols im Umhüllungsmaterial 60 bis 70 Gew.-% und der Anteil des talkumgefüllten LDPEs 20 bis 40 Gew.-% beträgt.

3. Schreibstift nach Anspruch 1, dadurch gekennzeichnet, daß der Anteil des talkumgefüllten Polystyrols im Umhüllungsmaterial 60 bis 90 Gew.-% und der Anteil des LDPEs 5 bis 35 Gew.-% beträgt.

4. Schreibstift nach Anspruch 1 oder 2, dadurch gekennzeichnet, daß das Umhüllungsmaterial aufweist:
| | |
|---|---|
| Polystyrol | 60 - 70 Gew.-% |
| talkumgefülltes LDPE | 20 - 40 Gew.-% |
| Farbbatches | 0,2 - 3 Gew.-% |
| Treibmittel | 0,3 - 1,2 Gew.-%. |

5. Schreibstif nach einem der Ansprüche 1 bis 4, dadurch gekennzeichnet, daß das Umhüllungsmaterial einen Haftvermittler mit einem Gewichtsanteil von 0,05 bis 0,2 Gew.-% aufweist.

6. Schreibstift nach einem der Ansprüche 1 bis 5, dadurch gekennzeichnet, daß das Treibmittel ein endotherm wirkendes Treibmittel ist.

7. Schreibstift nach einem der Ansprüche 1, 2 oder 4 bis 6, dadurch gekennzeichnet, daß der Talkumanteil im talkumgefüllten LDPE 30 bis 70 Gew.-% beträgt.

8. Schreibstift nach einem der Ansprüche 1, 3, 5 oder 6, dadurch gekennzeichnet, daß der Talkumanteil im talkumgefüllten Polystyrol 30 bis 70 Gew.-% beträgt.

9. Schreibstift nach einem der Ansprüche 1 bis 8, dadurch gekennzeichnet, daß auf der Minenumhüllung eine Außenschicht aufgebracht ist, die aus Polystyrol oder LDPE mit einem Anteil > 50 Gew.-% besteht.

10. Schreibstift gemäß einem der Ansprüche 1 bis 9 enthaltend eine Schreibmine mit Farbstoff, wie Graphit, Gleit- und/oder Haftstoffen sowie mit einem Bindemittel aus Polystyrol, dadurch gekennzeichnet,
daß das Minenmaterial in Gewichtsprozent enthält:
| | |
|---|---|
| Polystyrol | 10 - 40 Gew.-% |
| Stearinsäure | 2 - 10 Gew.-% |
| Calciumstearat | 2 - 10 Gew.-% |
| Farbstoff und ggf. weitere Zusätze | Rest. |

11. Schreibstift nach Anspruch 10, dadurch gekennzeichnet, daß das Minenmaterial enthält:
| | |
|---|---|
| Polystyrol | 30 Gew.-% |
| Graphit | 64,4 Gew,-% |
| Stearinsäure | 3,5 Gew.-% |
| Calciumstearat | 2,1 Gew.-%. |

12. Schreibstift nach Anspruch 10, dadurch gekennzeichnet, daß das Minenmaterial enthält:
| | |
|---|---|
| Polystyrol | 30 Gew.-% |
| Graphit | 56 Gew.-% |
| Stearinsäure | 4,9 Gew.-% |
| Calciumstearat | 9,1 Gew.-%. |

13. Schreibstift nach einem der Ansprüche 10 bis 12, dadurch gekennzeichnet, daß das Graphit des Minenmaterials ein Pudergraphit mit einer Körnung zwischen 15 und 50µm ist.

14. Schreibstift nach einem der Ansprüche 10 bis 13, dadurch gekennzeichnet, daß das Polystyrol des Minenmaterials ein HIPS (High-Impact-Polystyrol) ist.

15. Schreibstift nach einem der Ansprüche 10, 13 oder 14, dadurch gekennzeichnet, daß die Schreibmine Kieselsäure mit einem Anteil von 3 bis 8 Gew.-% enthält.

16. Schreibstift nach einem der Ansprüche 10, 13, 14 oder 15, dadurch gekennzeichnet, daß die Schreibmine als Farbstoff Ruß mit einem Anteil von 20 bis 40 Gew.-% und/oder Eisenoxid mit einem Anteil von 1 bis 10 Gew.-% enthält.

17. Verfahren zur Herstellung eines Schreibstiftes gemäß einem der Ansprüche 1 bis 9, dessen Minenmaterial und Umhüllungsmaterial als Bindemittel Polymere aufweisen, bei dem das Minenmaterial und das Umhüllungsmaterial extrudiert werden, dadurch gekennzeichnet,
daß als Bindemittel zumindest für das Umhüllungsmaterial Polystyrol verwendet wird,
daß dem Polymermaterial für das Minenmaterial erst im Extruder die weiteren Minenkomponenten zugesetzt und im Extruder mit dem Polymermaterial vermischt werden, und
daß dem Polystyrol für das Umhüllungsmaterial im Extruder ein endotherm wirkendes Treibmittel zugegeben wird und daß der Schäumvorgang des Polystyrols über die Extrudertemperatur gesteuert wird.

18. Verfahren nach Anspruch 17, dadurch gekennzeichnet, daß für das Minenmaterial zunächst ein Gemisch aus pulverförmigem Farbstoff, wie Graphit, Stearinsäure und Calciumstearat hergestellt wird und dieses Gemisch dem in Granulatform vorliegenden Polymermaterial im Extruder zugegeben wird.

19. Verfahren nach Anspruch 17 oder 18, dadurch gekennzeichnet, daß granulatförmiges Treibmittel zugegeben wird.

20. Verfahren nach einem der Ansprüche 17 oder 18, daduch gekennzeichnet, daß pulverförmiges Treibmittel zugegeben wird.

21. Verfahren nach Anspruch 20, dadurch gekennzeichnet, daß zusätzlich ein Haftvermittler, vorzugsweise Öl, dem Treibmittelpolymergemisch zugegeben wird.

22. Verfahren nach einem der Ansprüche 17 bis 21, dadurch gekennzeichnet, daß Treibmittel in einer Menge von 0,2 bis 1 Gew.-% zugegeben wird.

23. Verfahren nach einem der Ansprüche 17 bis 22, dadurch gekennzeichnet,
daß zunächst das Minenmaterial extrudiert wird und das erhaltene Minenprofil danach gerade so weit abgekühlt wird, daß das Minenmaterial nicht mehr plastisch ist,
daß das abgekühlte aber noch nicht vollständig erkaltete Minenprofil anschließend einem Spritzkopf zugeführt wird, wo das Umhüllungsmaterial aufextrudiert wird, und
daß danach das aus Umhüllung und Mine bestehende Strangprofil vollständig abgekühlt wird.

24. Verfahren nach einem der Ansprüche 17 bis 23, dadurch gekennzeichnet, daß die Temperatur im Extruder auf 150 bis 200°C eingestellt wird.

25. Verfahren nach Anspruch 24, dadurch gekennzeichnet, daß das Minenmaterial mit ca. 180°C extrudiert und das extrudierte Minenprofil anschließend auf eine Temperatur von ca. 80°C abgekühlt wird.

26. Verfahren nach einem der Ansprüche 17 bis 25, dadurch gekennzeichnet, daß während der Extrusion des Umhüllungsmaterials auf dieses eine Außenschicht extrudiert wird.

27. Verfahren nach einem der Ansprüche 17 bis 26, dadurch gekennzeichnet, daß die Extrusion des Umhüllungsmaterials und ggfs. der Außenschicht in einem in einem Kühlmedium befindlichen Kalibrierwerkzeug erfolgt.

## Claims

1. Pencil comprising a solid lead and a lead casing, the binder, at least in the casing material, comprising polymers, characterised in that
the binder, at least in the casing material, is polystyrene and
the casing material contains LDPE, the polystyrene and/or the LDPE being at least partially talc filled.

2. Pencil according to claim 1, characterised in that the proportion of polystyrene in the casing material is from 60 to 70% by weight and the proportion of talc-filled LDPE is from 20 to 40% by weight.

3. Pencil according to claim 1, characterised in that the proportion of talc-filled polystyrene in the casing material is from 60 to 90% by weight and the proportion of LDPE is from 5 to 35% by weight.

4. Pencil according to claim 1 or 2, characterised in that the casing material contains:
| | |
|---|---|
| polystyrene | 60 - 70% by weight |
| talc-filled LDPE | 20 - 40% by weight |
| colour batch | 0.2 - 3% by weight |
| foaming agent | 0.3 - 1.2% by weight. |

5. Pencil according to any one of claims 1 to 4, characterised in that the casing material contains an adhesion promoter in a proportion by weight of from 0.05 to 0.2% by weight.

6. Pencil according to any one of claims 1 to 5, characterised in that the foaming agent is an endothermally active foaming agent.

7. Pencil according to any one of claims 1, 2 and 4 to 6, characterised in that the proportion of talc in the talc-filled LDPE is from 30 to 70% by weight.

8. Pencil according to any one of claims 1, 3, 5 and 6, characterised in that the proportion of talc in the talc-filled polystyrene is from 30 to 70% by weight.

9. Pencil according to any one of claims 1 to 8, characterised in that an outer layer comprising polystyrene or LDPE in a proportion > 50% by weight is applied to the lead casing.

10. Pencil according to any one of claims 1 to 9, containing a lead with dye, such as graphite, lubricants and/or adhesives and with a binder of polystyrene, characterised in that
the lead material contains in % by weight:
| | |
|---|---|
| polystyrene | 10 - 40% by weight |
| stearic acid | 2 - 10% by weight |
| calcium stearate | 2 - 10% by weight |
| dye and optionally other additives | remainder. |

11. Pencil according to claim 10, characterised in that the lead material contains:
| | |
|---|---|
| polystyrene | 30% by weight |
| graphite | 64.4% by weight |
| stearic acid | 3.5% by weight |
| calcium stearate | 2.1% by weight. |

12. Pencil according to claim 10, characterised in that the lead material contains:
| | |
|---|---|
| polystyrene | 30% by weight |
| graphite | 56% by weight |
| stearic acid | 4.9% by weight |
| calcium stearate | 9.1% by weight. |

13. Pencil according to any one of claims 10 to 12, characterised in that the graphite of the lead material is a powdered graphite having a grain size of between 15 and 50 µm.

14. Pencil according to any one of claims 10 to 13, characterised in that the polystyrene of the lead material is a HIPS (High Impact Polystyrene).

15. Pencil according to any one of claims 10, 13 and 14, characterised in that the lead contains silicic acid in a proportion of from 3 to 8% by weight.

16. Pencil according to any one of claims 10, 13, 14 and 15, characterised in that the lead contains, as dye, carbon black in a proportion of from 20 to 40% by weight and/or iron oxide in a proportion of from 1 to 10% by weight.

17. Process for the manufacture of a pencil according to any one of claims 1 to 9, of which the lead material and casing material contain polymers as binders, wherein the lead material and the casing material are extruded, characterised in that
polystyrene is used as binder at least for the casing material,
the further lead components are added to the polymer material for the lead material only when the polymer material has been introduced into the extruder, and are mixed with the polymer material in the extruder, and
an endothermally active foaming agent is added to the polystyrene for the casing material in the extruder and the foaming process of the polystyrene is controlled by means of the extruder temperature.

18. Process according to claim 17, characterised in that, for the lead material, a mixture of pulverulent dye, such as graphite, stearic acid and calcium stearate, is first produced and the mixture is added to the granular-form polymer material in the extruder.

19. Process according to claim 17 or 18, characterised in that granular-form foaming agent is added.

20. Process according to either claim 17 or claim 18, characterised in that pulverulent foaming agent is added.

21. Process according to claim 20, characterised in that an adhesion promoter, preferably oil, is additionally added to the foaming agent polymer mixture.

22. Process according to any one of claims 17 to 21, characterised in that foaming agent is added in an amount of from 0.2 to 1% by weight.

23. Process according to any one of claims 17 to 22, characterised in that
the lead material is first extruded and the resulting lead section is then cooled just to the extent that the lead material is no longer plastic,
the cooled but not yet completely cold lead section is then conveyed to an extruder head where the casing material is extruded onto it, and
subsequently the extruded section comprising the casing and the lead is completely cooled.

24. Process according to any one of claims 17 to 23, characterised in that the temperature in the extruder is adjusted to from 150 to 200°C.

25. Process according to claim 24, characterised in that the lead material is extruded at approximately 180°C and the extruded lead section is then cooled to a temperature of approximately 80°C.

26. Process according to any one of claims 17 to 25, characterised in that, during the extrusion of the casing material, an outer layer is extruded onto it.

27. Process according to any one of claims 17 to 26, characterised in that the extrusion of the casing material and optionally the outer layer is carried out in a calibrating tool arranged in a cooling medium.

## Revendications

1. Crayon à écrire, constitué d'une mine à écrire et d'une enveloppe de mine, où le liant est constitué d'au moins un matériau d'enveloppe en un polymère, caractérisé en ce que le liant, au moins dans le matériau d'enveloppe, est le polystyrène, et le matériau d'enveloppe comporte du PEBD, le polystyrène et/ou le PEBD étant au moins partiellement chargés de talc.

2. Crayon à écrire selon la revendication 1, caractérisé en ce que la proportion du polystyrène dans le matériau d'enveloppe est de 60 à 70 % en poids, et la proportion du PEBD chargé de talc est de 20 à 40 % en poids.

3. Crayon à écrire selon la revendication 1, caractérisé en ce que la proportion du polystyrène chargé de talc dans le matériau d'enveloppe est de 60 à 90 % en poids, et la proportion du PEBD est de 5 à 35 % en poids.

4. Crayon à écrire selon la revendication 1 ou 2, caractérisé en ce que le matériau d'enveloppe comprend :
| | |
|---|---|
| Polystyrène | 60 à 70 % en poids |
| PEBD chargé de talc | 20 à 40 % en poids |
| Mélange coloré maître | 0,2 à 3 % en poids |
| Agent porogène | 0,3 à 1,2 % en poids |

5. Crayon à écrire selon l'une des revendications 1 à 4, caractérisé en ce que le matériau d'enveloppe comporte un promoteur d'adhérence selon une proportion pondérale de 0,05 à 0,2 % en poids.

6. Crayon à écrire selon l'une des revendications 1 à 5, caractérisé en ce que l'agent porogène est un agent porogène à effet endothermique.

7. Crayon à écrire selon l'une des revendications 1, 2 ou 4 à 6, caractérisé en ce que la proportion du talc dans le PEBD chargé de talc est de 30 à 70 % en poids.

8. Crayon à écrire selon l'une des revendications 1, 3, 5 ou 6, caractérisé en ce que la proportion du talc dans le polystyrène chargé de talc est de 30 à 70 % en poids.

9. Crayon à écrire selon l'une des revendications 1 à 8, caractérisé en ce qu'une couche extérieure constituée de polystyrène ou de PEBD selon une proportion > 50 % en poids est appliquée sur l'enveloppe de la mine.

10. Crayon à écrire selon l'une des revendications 1 à 9, contenant une mine à écrire avec un colorant, tel que le graphite, des agents de glissement et/ou d'adhérence, ainsi qu'un liant constitué de polystyrène, caractérisé en ce que le matériau de la mine contient, en pour cent en poids :
| | |
|---|---|
| Polystyrène | 10 à 40 % en poids |
| Acide stéarique | 2 à 10 % en poids |
| Stéarate de calcium | 2 à 10 % en poids |
| Colorant et éventuellement autres additifs | Le reste. |

11. Crayon à écrire selon la revendication 10, caractérisé en ce que le matériau de la mine contient :
| | |
|---|---|
| Polystyrène | 30 % en poids |
| Graphite | 64,4 % en poids |
| Acide stéarique | 3,5 % en poids |
| Stéarate de calcium | 2,1 % en poids |

12. Crayon à écrire selon la revendication 10, caractérisé en ce que le matériau de la mine contient :
| | |
|---|---|
| Polystyrène | 30 % en poids |
| Graphite | 56 % en poids |
| Acide stéarique | 4,9 % en poids |
| Stéarate de calcium | 9,1 % en poids |

13. Crayon à écrire selon l'une des revendications 1 à 12, caractérisé en ce que le graphite du matériau de la mine est un graphite en poudre ayant une granulométrie de 15 à 50 µm.

14. Crayon à écrire selon l'une des revendications 10 à 13, caractérisé en ce que le polystyrène du matériau de la mine est un polystyrène anti-chocs (HIPS, High Impact Polystyrol).

15. Crayon à écrire selon l'une des revendications 10, 13 ou 14, caractérisé en ce que la mine à écrire contient de la silice selon une proportion de 3 à 8 % en poids.

16. Crayon à écrire selon l'une des revendications 10, 13, 14 ou 15, caractérisé en ce que la mine à écrire contient en tant que colorant du noir de carbone selon une proportion de 20 à 40 % en poids et/ou de l'oxyde de fer selon une proportion de 1 à 10 % en poids.

17. Procédé de fabrication d'un crayon à écrire selon l'une des revendications 1 à 9, dont le matériau de la mine et le matériau d'enveloppe contiennent un polymère en tant que liant, procédé dans lequel le matériau de la mine et le matériau d'enveloppe sont extrudés, caractérisé en ce qu'on utilise en tant que liant, au moins pour le matériau d'enveloppe, du polystyrène ; que les autres constituants de la mine ne sont ajoutés au matériau polymère destiné au matériau de la mine que dans l'extrudeuse, et, dans l'extrudeuse, sont mélangés au matériau polymère ; et que l'on ajoute un agent porogène à effet endothermique au polystyrène destiné au matériau d'enveloppe dans l'extrudeuse, et que l'opération de moussage du polystyrène est pilotée en fonction de la température de l'extrudeuse.

18. Procédé selon la revendication 17, caractérisé en ce que, pour le matériau de la mine, on prépare d'abord un mélange d'un colorant en poudre, tel que le graphite, d'acide stéarique et de stéarate de calcium, et on ajoute ce mélange au matériau polymère se trouvant sous forme d'un granulé dans l'extrudeuse.

19. Procédé selon la revendication 17 ou 18, caractérisé en ce qu'on ajoute un agent porogène sous forme de granulés.

20. Procédé selon l'une des revendications 17 ou 18, caractérisé en ce qu'on ajoute un agent porogène sous forme de poudre.

21. Procédé selon la revendication 20, caractérisé en ce qu'on ajoute en outre un promoteur d'adhérence, de préférence une huile, au mélange agent porogène-polymère.

22. Procédé selon l'une des revendications 17 à 21, caractérisé en ce que l'agent porogène est ajouté en une quantité de 0,2 à 1 % en poids.

23. Procédé selon l'une des revendications 17 à 22, caractérisé en ce qu'on extrude d'abord le matériau de la mine et le profil de mine ainsi obtenu est ensuite juste assez refroidi pour que le matériau de la mine ne soit plus plastique ; que le profil de mine, rafraîchi mais non encore complètement refroidi, est ensuite envoyé à une tête d'injection, dans laquelle il est entouré par extrusion du matériau d'enveloppe ; et que le profil extrudé, constitué de l'enveloppe et de la mine, est ensuite complètement refroidi.

24. Procédé selon l'une des revendications 17 à 23, caractérisé en ce que la température dans l'extrudeuse est ajustée à une valeur de 150 à 200°C.

25. Procédé selon la revendication 24, caractérisé en ce que le matériau de la mine est extrudé à environ 180°C, et le profil extrudé de la mine est ensuite refroidi à une température d'environ 80°C.

26. Procédé selon l'une des revendications 17 à 25, caractérisé en ce que, pendant l'extrusion du matériau d'enveloppe, on extrude sur ce dernier une couche extérieure.

27. Procédé selon l'une des revendications 17 à 26, caractérisé en ce que l'extrusion du matériau d'enveloppe et éventuellement de la couche extérieure, est réalisée dans un outil de calibrage se trouvant dans un fluide de refroidissement.
